# FASCICULE DE BREVET EUROPEEN

(11) **EP 3 507 114 B1**
(45) Date de publication et mention de la délivrance du brevet: **08.07.2020**
(21) Numéro de dépôt: 17754741.1
(22) Date de dépôt: 21.07.2017
(51) Int. Cl.: B60H 1/00, B60H 1/22, F25B 25/00, F25B 40/02, B60H 1/32

(54) **CIRCUIT DE CLIMATISATION INVERSIBLE INDIRECT DE VÉHICULE AUTOMOBILE ET PROCÉDÉ DE FONCTIONNEMENT CORRESPONDANT**
INDIREKTER REVERSIBLER KLIMATISIERUNGSKREISLAUF FÜR EIN KRAFTFAHRZEUG UND ZUGEHÖRIGES BETRIEBSVERFAHREN
INDIRECT REVERSIBLE AIR-CONDITIONING CIRCUIT FOR A MOTOR VEHICLE AND CORRESPONDING OPERATING METHOD

(30) Priorité: 30.08.2016 FR 1658034
(43) Date de publication de la demande: 10.07.2019
(73) Titulaire: Valeo Systemes Thermiques, 78320 Le Mesnil Saint Denis (FR)
(72) Inventeur: BENOUALI, Jugurtha, 78322 Le Mesnil Saint-Denis Cedex (FR)
(74) Mandataire: Tran, Chi-Hai
(86) Numéro de dépôt international: PCT/FR2017/052015
(87) Numéro de publication internationale: WO 2018/042090

(56) Documents cités:
- EP-A1- 2 933 586
- EP-A1- 2 937 235
- JP-A- H10 297 270
- US-A1- 2003 177 778
- US-A1- 2015 276 281

## Description

L'invention se rapporte au domaine des véhicules automobiles et plus particulièrement à un circuit de climatisation de véhicule automobile et son procédé de fonctionnement.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est à dire qu'il peut absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un circuit de climatisation indirect, comme décrit dans la demande de brevet EP2933586. On entend par indirect ici que le circuit de climatisation comporte deux boucles de circulation de deux fluides distincts (comme par exemple un fluide réfrigérant et de l'eau glycolée) afin d'effectuer les différents échanges de chaleur.

Le circuit de climatisation de la demande de brevet EP2933586 comprend ainsi une première boucle de fluide réfrigérant dans laquelle circule un fluide réfrigérant, une deuxième boucle de fluide caloporteur dans laquelle circule un fluide caloporteur, et un échangeur de chaleur bifluide agencé conjointement sur la première boucle de fluide réfrigérant et sur la deuxième boucle de fluide caloporteur, de façon à permettre les échanges de chaleur entre lesdites boucles.

Un tel circuit de climatisation permet une utilisation selon différents modes de fonctionnement mais peine à fournir un mode de fonctionnement dont les performances sont satisfaisantes pour permettre une montée en température rapide du flux d'air intérieur et ce indépendamment des conditions extérieures et notamment de la température du flux d'air extérieur.

Un des buts de la présente invention est donc de remédier au moins partiellement aux inconvénients de l'art antérieur et de proposer un circuit de climatisation amélioré.

La présente invention concerne donc un circuit de climatisation indirect pour véhicule automobile comportant :
- une première boucle de fluide réfrigérant dans laquelle circule un fluide réfrigérant, ladite première boucle de fluide réfrigérant comportant dans le sens de circulation du fluide réfrigérant :
   ∘ un compresseur,
   ∘ un premier dispositif de détente,
   ∘ un premier échangeur de chaleur étant destiné à être traversé par un flux d'air intérieur au véhicule automobile,
   ∘ un deuxième dispositif de détente,
   ∘ un deuxième échangeur de chaleur étant destiné à être traversé par un flux d'air extérieur au véhicule automobile, et
   ∘ une conduite de contournement du deuxième échangeur de chaleur,
- une deuxième boucle de fluide caloporteur dans laquelle circule un fluide caloporteur, et
- un échangeur de chaleur bifluide agencé conjointement sur la première boucle de fluide réfrigérant en aval du compresseur, entre ledit compresseur et le premier dispositif de détente, et sur la deuxième boucle de fluide caloporteur, de façon à permettre les échanges de chaleur entre la première boucle de fluide réfrigérant et la deuxième boucle de fluide caloporteur,
   la première boucle de fluide réfrigérant comportant une conduite de dérivation du fluide réfrigérant, reliant la sortie de fluide réfrigérant de l'échangeur de chaleur bifluide à un point disposé en amont du compresseur, entre la sortie de fluide réfrigérant de la conduite de contournement et ledit compresseur.

Selon un aspect de l'invention, le circuit de climatisation inversible indirect comporte un dispositif de redirection du fluide réfrigérant en provenance de l'échangeur de chaleur bifluide vers le premier dispositif de détente ou vers la conduite de dérivation.

Selon un autre aspect de l'invention, le circuit de climatisation inversible indirect comporte un dispositif de redirection du fluide réfrigérant en provenance du premier échangeur de chaleur vers le deuxième échangeur de chaleur ou vers la conduite de contournement.

Selon un autre aspect de l'invention, la deuxième boucle de fluide caloporteur comporte :
∘ l'échangeur de chaleur bifluide,
∘ une première conduite de circulation de fluide caloporteur comportant un troisième échangeur de chaleur destiné à être traversé par un flux d'air intérieur au véhicule automobile, et reliant un premier point de jonction disposé en aval de l'échangeur de chaleur bifluide et un deuxième point de jonction disposé en amont dudit échangeur de chaleur bifluide,
∘ une deuxième conduite de circulation de fluide caloporteur comportant un quatrième échangeur de chaleur destiné à être traversé par un flux d'air extérieur au véhicule automobile, et reliant le premier point de jonction disposé en aval de l'échangeur de chaleur bifluide et le deuxième point de jonction disposé en amont dudit échangeur de chaleur bifluide, et
∘ une pompe disposée en aval ou en amont de l'échangeur de chaleur bifluide, entre le premier point de jonction et le deuxième point de jonction.

Selon un autre aspect de l'invention, la première boucle de fluide caloporteur comporte un élément électrique chauffant du fluide caloporteur disposé, dans le sens de circulation du fluide caloporteur, en aval de l'échangeur de chaleur bifluide, entre ledit échangeur de chaleur bifluide et le premier point de jonction.

Selon un autre aspect de l'invention, le circuit de climatisation inversible indirect comporte un dispositif de redirection du fluide caloporteur en provenance de l'échangeur de chaleur bifluide vers la première conduite de circulation et/ou vers la deuxième conduite de circulation.

Selon un autre aspect de l'invention, le circuit de climatisation inversible indirect comporte un volet d'obstruction du flux d'air intérieur traversant le troisième échangeur de chaleur.

Selon un autre aspect de l'invention, la première boucle de fluide réfrigérant comporte un échangeur de chaleur interne permettant un échange de chaleur entre le fluide réfrigérant en sortie de l'échangeur de chaleur bifluide et le fluide réfrigérant en sortie du premier échangeur de chaleur ou du deuxième échangeur de chaleur.

La présente invention concerne également un procédé de fonctionnement d'un circuit de climatisation inversible indirect tel que décrit précédemment, selon un mode de fonctionnement pleine puissance dans lequel :
∘ le fluide réfrigérant passe successivement dans le compresseur, l'échangeur de chaleur bifluide, la conduite de dérivation, le troisième dispositif de détente avant de retourner au compresseur, et
∘ le fluide caloporteur circule entre l'échangeur de chaleur bifluide et le troisième échangeur de chaleur de la première conduite de circulation.

Selon un aspect le procédé selon l'invention fonctionne selon un mode de fonctionnement de refroidissement dans lequel :
∘le fluide réfrigérant passe successivement dans le compresseur, l'échangeur de chaleur bifluide, le premier dispositif de détente, le premier échangeur de chaleur avant de retourner au compresseur,
∘une portion du fluide caloporteur en sortie de l'échangeur de chaleur bifluide circule dans le troisième échangeur de chaleur de la première conduite de circulation et une autre portion du fluide caloporteur en sortie de l'échangeur de chaleur bifluide circule dans le quatrième échangeur de chaleur de la deuxième conduite de circulation, et
∘le volet d'obstruction étant fermé de sorte à empêcher le flux d'air intérieur de circuler dans le troisième échangeur de chaleur.

Selon un autre aspect du procédé :
∘le fluide réfrigérant en sortie du premier échangeur de chaleur passe dans l'échangeur de chaleur interne avant de retourner au compresseur, et
∘le fluide réfrigérant en sortie de l'échangeur de chaleur bifluide passe dans l'échangeur de chaleur interne avant de traverser le premier dispositif de détente.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation inversible indirect selon un premier mode de réalisation,
- la figure 2 montre une représentation schématique d'un circuit de climatisation inversible indirect selon un deuxième mode de réalisation,
- les figures 3a et 3b montrent des représentations schématiques des dispositifs de détente selon différents modes de réalisation,
- la figure 4 montre une représentation schématique de la deuxième boucle de fluide caloporteur du circuit de climatisation inversible indirect des figures 1 ou 2, selon un mode de réalisation alternatif,
- la figure 5a montre le circuit de climatisation inversible indirect de la figure 1 selon un mode de refroidissement,
- la figure 5b montre un diagramme pression / enthalpie du mode de refroidissement illustré à la figure 5a,
- la figure 6a montre le circuit de climatisation inversible indirect de la figure 2 selon le mode de refroidissement,
- la figure 6b montre un diagramme pression / enthalpie du mode de refroidissement illustré à la figure 6a,
- la figure 7a montre le circuit de climatisation inversible indirect de la figure 1 selon un mode de déshumidification,
- la figure 7b montre un diagramme pression / enthalpie du mode de déshumidification illustré à la figure 7a,
- la figure 8a montre le circuit de climatisation inversible indirect de la figure 2 selon le mode de déshumidification,
- la figure 8b montre un diagramme pression / enthalpie du mode de déshumidification illustré à la figure 8a,
- la figure 9a montre le circuit de climatisation inversible indirect de la figure 1 selon un mode pompe à chaleur,
- la figure 9b montre un diagramme pression / enthalpie du mode pompe à chaleur illustré à la figure 9a,
- la figure 10a montre le circuit de climatisation inversible indirect de la figure 2 selon un mode pompe à chaleur,
- la figure 10b montre un diagramme pression / enthalpie du mode pompe à chaleur illustré à la figure 10a,
- les figures 11 et 12 montrent la première boucle de fluide réfrigérant respectivement des figures 1 et 2 selon un premier mode de dégivrage,
- les figures 13 et 14 montrent les deuxièmes boucles de fluide caloporteur respectivement des figures 1 et 4 selon un deuxième mode de dégivrage,
- la figure 15a montre le circuit de climatisation inversible indirect de la figure 1 selon un mode gaz chaud,
- la figure 15b montre un diagramme pression / enthalpie du mode gaz chaud illustré à la figure 9a,
- la figure 16a montre le circuit de climatisation inversible indirect de la figure 2 selon un mode gaz chaud,
- la figure 16b montre un diagramme pression / enthalpie du mode gaz chaud illustré à la figure 16a,
- les figures 17a et 17b montrent le circuit de climatisation inversible indirect respectivement des figures 1 et 2 selon un mode pleine puissance,
- la figure 17c montre un diagramme pression / enthalpie du mode pleine puissance illustré aux figures 17a et 17b.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

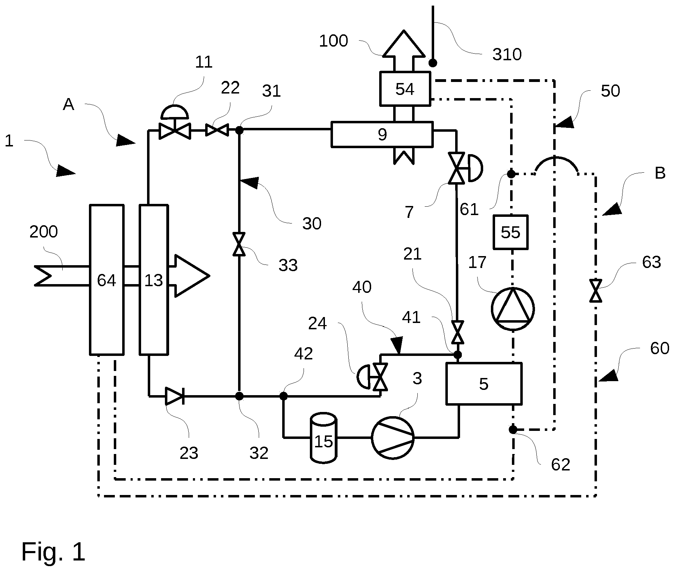

La figure 1 montre un circuit de climatisation indirect 1 pour véhicule automobile. Ce circuit de climatisation indirect 1 comporte notamment :
- une première boucle de fluide réfrigérant A dans laquelle circule un fluide réfrigérant,
- une deuxième boucle de fluide caloporteur B dans laquelle circule un fluide caloporteur, et
- un échangeur de chaleur bifluide 5 agencé conjointement sur la première boucle de fluide réfrigérant A et sur la deuxième boucle de fluide caloporteur B, de façon à permettre les échanges de chaleur entre ladite première boucle de fluide réfrigérant A et ladite deuxième boucle de fluide caloporteur B.

La première boucle de fluide réfrigérant A comporte plus particulièrement dans le sens de circulation du fluide réfrigérant :
∘ un compresseur 3,
∘ l'échangeur de chaleur bifluide 5, disposé en aval dudit compresseur 3,
∘ un premier dispositif de détente 7,
∘ un premier échangeur de chaleur 9 étant destiné à être traversé par un flux d'air intérieur 100 au véhicule automobile,
∘ un deuxième dispositif de détente 11,
∘ un deuxième échangeur de chaleur 13 étant destiné à être traversé par un flux d'air extérieur 200 au véhicule automobile, et
∘ une conduite de contournement 30 du deuxième échangeur de chaleur 13.

La conduite de contournement 30 peut relier plus spécifiquement un premier point de raccordement 31 et un deuxième point de raccordement 32.

Le premier point de raccordement 31 est de préférence disposé, dans le sens de circulation du fluide réfrigérant, en aval du premier échangeur de chaleur 9, entre ledit premier échangeur de chaleur 9 et le deuxième échangeur de chaleur 13. Plus particulièrement, et comme illustré sur la figure 1, le premier point de raccordement 31 est disposé entre le premier échangeur de chaleur 9 et le deuxième dispositif de détente 11. Il est cependant tout à fait possible d'imaginer que le premier point de raccordement 31 soit disposé entre le deuxième dispositif de détente 11 et le deuxième échangeur de chaleur 13 du moment que le fluide réfrigérant a la possibilité de contourner ledit deuxième dispositif de détente 11 ou de le traverser sans subir de perte de pression.

Le deuxième point de raccordement 32 est quant à lui de préférence disposé en aval du deuxième échangeur de chaleur 13, entre ledit échangeur de chaleur 13 et le compresseur 3.

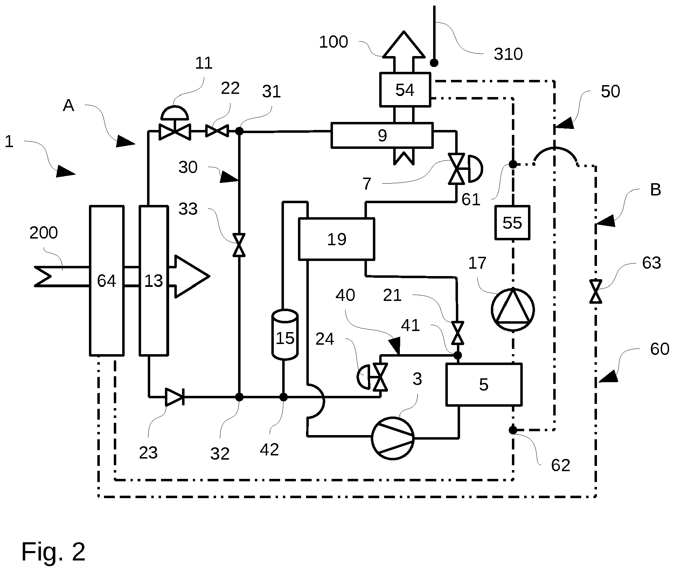

Comme illustré sur la figure 2, la première boucle de fluide réfrigérant A peut également comporter un échangeur de chaleur interne 19 (IHX pour « internai heat exchanger ») permettant un échange de chaleur entre le fluide réfrigérant en sortie de l'échangeur de chaleur bifluide 5 et le fluide réfrigérant en sortie du deuxième échangeur de chaleur 13 ou de la conduite de contournement 30. Cet IHX 19 comporte notamment une entrée et une sortie de fluide réfrigérant en provenance du deuxième point de raccordement 32, ainsi qu'une entrée et une sortie de fluide réfrigérant en provenance de l'échangeur de chaleur bifluide 5.

Comme le montrent les figures 1 et 2, la première boucle de fluide réfrigérant peut également comporter un accumulateur 15 disposé en amont du compresseur 3, plus précisément entre le deuxième point de raccordement 32 et ledit compresseur 3. Dans le cas où un IHX 19 est présent, ledit accumulateur 15 est disposé en amont dudit IHX 19, entre le deuxième point de raccordement 32 et ledit IHX 19. Cet accumulateur 15 permet notamment de réaliser une séparation de phase du fluide réfrigérant de sorte que le fluide réfrigérant arrivant au compresseur 3 ou dans l'IHX 19 soit en phase gazeuse.

La première boucle de fluide réfrigérant A comporte également une conduite de dérivation 40 du fluide réfrigérant, reliant la sortie de fluide réfrigérant de l'échangeur de chaleur bifluide 5 à un point disposé en amont du compresseur 3, entre la sortie de fluide réfrigérant de la conduite de contournement 30 et ledit compresseur 3. Cette conduite de dérivation 40 comporte en outre un troisième dispositif de détente 24.

Plus précisément, la conduite de dérivation 40 relie un troisième point de raccordement 41 et un quatrième point de raccordement 42.

Le troisième point de raccordement 41 est disposé en aval de l'échangeur de chaleur bifluide 5, entre ledit échangeur de chaleur bifluide 5 et le premier dispositif de détente 7.

Le quatrième point de raccordement 42 est quant à lui disposé en aval du deuxième point de raccordement 32, entre ledit deuxième point de raccordement 32 et le compresseur 3. Dans le cas où la première boucle de fluide réfrigérant comporte un IHX 19, le quatrième point de raccordement 42 est disposé en amont dudit IHX 19 et si un accumulateur 15 est présent, ledit quatrième point de raccordement 42 est disposé en amont dudit accumulateur 15.

Le circuit de climatisation inversible indirecte 1 comporte un dispositif de redirection du fluide réfrigérant en provenance de l'échangeur de chaleur bifluide 5 vers le premier dispositif de détente 7 ou vers la conduite de dérivation 40.

Ce dispositif de redirection du fluide réfrigérant en provenance de l'échangeur de chaleur bifluide 5 peut notamment comporter :
- une première vanne d'arrêt 21 disposée en aval du troisième point de raccordement 41, entre ledit troisième point de raccordement 41 et le premier dispositif de détente 7. Une alternative à cette première vanne d'arrêt 41 peut être que le premier dispositif de détente 7 comporte une fonction d'arrêt de sorte à pouvoir bloquer le fluide réfrigérant et l'empêcher de circuler,
- le troisième dispositif de détente 24 peut comporter une fonction d'arrêt de sorte à pouvoir bloquer le fluide réfrigérant et l'empêcher de circuler dans la conduite de dérivation 40. Une alternative à ce troisième dispositif de détente 24 particulier serait de munir la conduite de dérivation 40 d'une vanne d'arrêt dédiée.

Une autre alternative (non représentée) peut également être de disposer une vanne trois-voies au niveau du troisième point de raccordement 41.

Le circuit de climatisation inversible indirecte 1 comporte également un dispositif de redirection du fluide réfrigérant en provenance du premier échangeur de chaleur 9 vers le deuxième échangeur de chaleur 13 ou vers la conduite de contournement 30.

Ce dispositif de redirection du fluide réfrigérant en provenance du premier échangeur de chaleur 9 peut notamment comporter :
- une deuxième vanne d'arrêt 22 disposée en aval du premier point de raccordement 31, entre ledit premier point de raccordement 31 et le deuxième dispositif de détente 11. Une alternative à cette deuxième vanne d'arrêt 22 peut être que le deuxième dispositif de détente 11 comporte une fonction d'arrêt de sorte à pouvoir bloquer le fluide réfrigérant et l'empêcher de circuler,
- une troisième vanne d'arrêt 33 disposée sur la conduite de contournement 30, et
- un clapet antiretour 23 disposé en aval du deuxième échangeur de chaleur 13, entre ledit deuxième échangeur de chaleur 13 et le deuxième point de raccordement 32.

Une autre alternative (non représentée) peut également être de disposer une vanne trois-voies au niveau du premier point de raccordement 31.

Par vanne d'arrêt, clapet antiretour, vanne trois-voies ou dispositif de détente avec fonction d'arrêt, on entend ici des éléments mécaniques ou électromécaniques pouvant être pilotés par une unité de commande électronique embarquée dans le véhicule automobile.

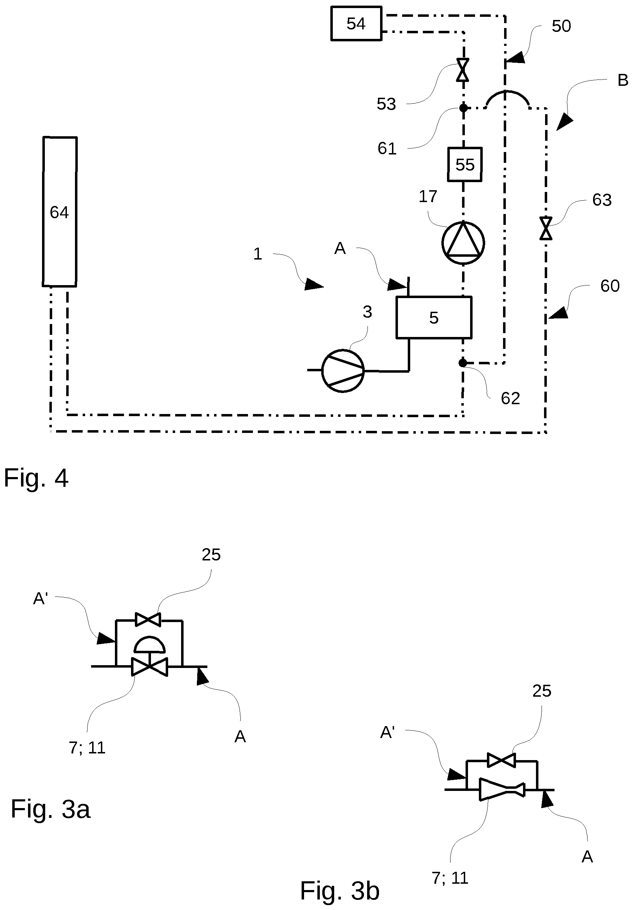

Les premier 7 et deuxième 11 dispositifs de détente peuvent être des détendeurs pilotés, comme illustré par la figure 3a, ou des orifices tubes, comme illustré par la figure 3b. Lesdits premier 7 et deuxième 11 dispositifs de détente peuvent également être contournés par une conduite de dérivation A', comportant notamment une vanne d'arrêt 25. Cette conduite de dérivation A' permet au fluide réfrigérant de contourner lesdits premier 7 et deuxième 11 dispositifs de détente sans qu'il subisse une perte de pression.

La deuxième boucle de fluide caloporteur B peut comporter quant à elle :
∘ l'échangeur de chaleur bifluide 5,
∘ une première conduite de circulation 50 de fluide caloporteur comportant un troisième échangeur de chaleur 54 destiné à être traversé par un flux d'air intérieur 100 au véhicule automobile, et reliant un premier point de jonction 61 disposé en aval de l'échangeur de chaleur bifluide 5 et un deuxième point de jonction 62 disposé en amont dudit échangeur de chaleur bifluide 5,
∘ une deuxième conduite de circulation 60 de fluide caloporteur comportant un quatrième échangeur de chaleur 64 destiné à être traversé par un flux d'air extérieur 200 au véhicule automobile, et reliant le premier point de jonction 61 disposé en aval de l'échangeur de chaleur bifluide 5 et le deuxième point de jonction 62 disposé en amont dudit échangeur de chaleur bifluide 5, et
∘ une pompe 17 disposée en aval ou en amont de l'échangeur de chaleur bifluide 5, entre le premier point de jonction 61 et le deuxième point de jonction 62.

Le circuit de climatisation inversible indirecte 1 comporte au sein de la deuxième boucle de fluide caloporteur B un dispositif de redirection du fluide caloporteur en provenance de l'échangeur de chaleur bifluide 5 vers la première conduite de circulation 50 et/ou vers la deuxième conduite de circulation 60.

Comme illustré sur les figures 1 et 2, ledit dispositif de redirection du fluide caloporteur en provenance de l'échangeur de chaleur bifluide 5 peut notamment comporter une quatrième vanne d'arrêt 63 disposée sur la deuxième conduite de circulation 60 afin de bloquer ou non le fluide caloporteur et de l'empêcher de circuler dans ladite deuxième conduite de circulation 60.

Le circuit de climatisation inversible indirect 1 peut également comporter un volet d'obstruction 310 du flux d'air intérieur 100 traversant le troisième échangeur de chaleur 54.

Ce mode de réalisation permet notamment de limiter le nombre de vannes sur la deuxième boucle de fluide caloporteur B et ainsi permet de limiter les coûts de productions.

Selon un mode de réalisation alternatif illustré à la figure 4, le dispositif de redirection du fluide caloporteur en provenance de l'échangeur de chaleur bifluide 5 peut notamment comporter
- une quatrième vanne d'arrêt 63 disposée sur la deuxième conduite de circulation 60 afin de bloquer ou non le fluide caloporteur et de l'empêcher de circuler dans ladite deuxième conduite de circulation 60, et
- une cinquième vanne d'arrêt 53 disposée sur la première conduite de circulation 50 afin de bloquer ou non le fluide caloporteur et de l'empêcher de circuler dans ladite première conduite de circulation 50.

La deuxième boucle de fluide caloporteur B peut également comporter un élément électrique chauffant 55 du fluide caloporteur. Ledit élément électrique chauffant 55 est notamment disposé, dans le sens de circulation du fluide caloporteur, en aval de l'échangeur de chaleur bifluide 5, entre ledit échangeur de chaleur bifluide 5 et le premier point de jonction 61.

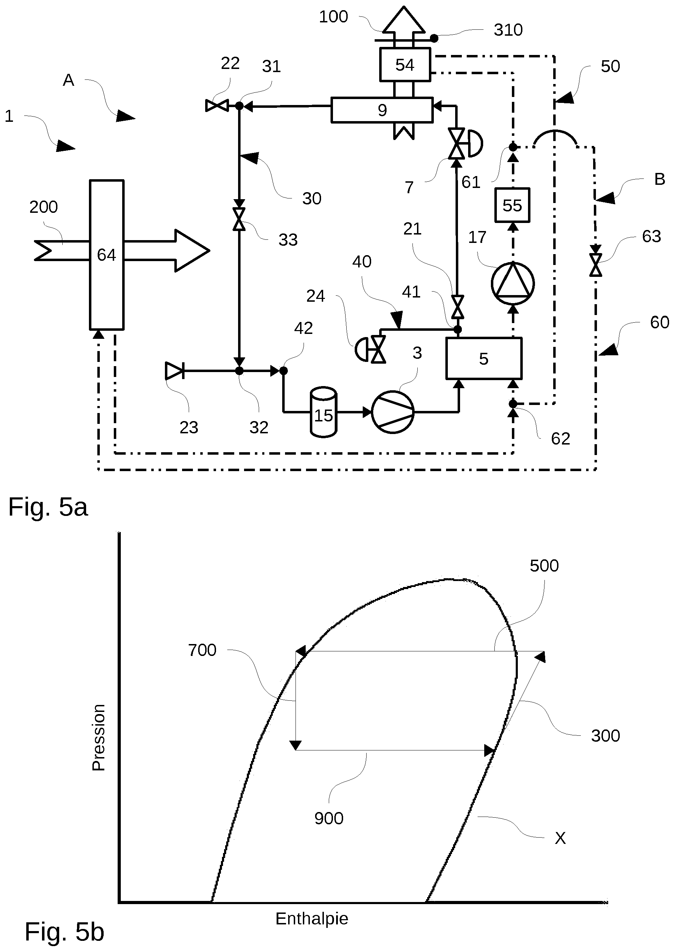

La présente invention concerne également un procédé de fonctionnement du circuit de climatisation inversible indirect 1 selon différents modes de fonctionnement illustrés aux figures 5a à 17c. Sur les figures 5a, 6a, 7a, 8a, 9a, 10, 11 à 15a, 16a, 17a et 17b, seuls les éléments dans lesquels le fluide réfrigérant et/ou le fluide caloporteur circulent sont représentés. Le sens de circulation du fluide réfrigérant et/ou du fluide caloporteur est représenté par des flèches.

La figure 5a montre un mode de refroidissement dans lequel :
- le fluide réfrigérant passe successivement dans le compresseur 3, l'échangeur de chaleur bifluide 5, le premier dispositif de détente 7 et le premier échangeur de chaleur 9 avant de retourner au compresseur 3,
- une portion du fluide caloporteur en sortie de l'échangeur de chaleur bifluide 5 circule dans le troisième échangeur de chaleur 54 de la première conduite de circulation 50 et une autre portion du fluide caloporteur en sortie de l'échangeur de chaleur bifluide 5 circule dans le quatrième échangeur de chaleur 64 de la deuxième conduite de circulation 50,
- le volet d'obstruction 310 est fermé de sorte à empêcher le flux d'air intérieur 100 de circuler dans le troisième échangeur de chaleur 54.

Les variations de pression et d'enthalpie que subit le fluide réfrigérant lors de ce mode de refroidissement, sont illustrées sur le diagramme pression / enthalpie de la figure 5b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3.

Le fluide réfrigérant traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant perd alors de l'enthalpie tout en restant à une pression constante.

Le fluide réfrigérant passe ensuite dans le premier dispositif de détente 7. Le fluide réfrigérant subit une perte de pression isenthalpique, illustrée par la flèche 700 et croise la courbe de saturation X, ce qui le fait passer dans un état de mélange liquide plus gaz.

Le fluide réfrigérant passe ensuite dans le premier échangeur de chaleur 9 où il gagne de l'enthalpie comme illustré par la flèche 900 en refroidissant le flux d'air intérieur 100. Le fluide réfrigérant rejoint ainsi la courbe de saturation X et repasse à l'état gazeux.

A la sortie du premier échangeur de chaleur 9, le fluide réfrigérant est redirigé vers la conduite de contournement 30 avant de rentrer de nouveau dans le compresseur 3.

Ce mode de refroidissement est utile pour refroidir le flux d'air intérieur 100.

Dans ce mode de refroidissement, les dispositifs de redirection du fluide réfrigérant sont configurés de sorte que le fluide réfrigérant ne circule pas dans le deuxième échangeur de chaleur 13 ni dans la conduite de dérivation 40.

Cela est notamment possible en :
- fermant le troisième dispositif de détente 24 et en ouvrant la première vanne d'arrêt 21 afin que le fluide réfrigérant en sortie de l'échangeur de chaleur bifluide 5 ne circule pas dans la conduite de dérivation 40,
- fermant la deuxième vanne d'arrêt 22 et en ouvrant la troisième vanne d'arrêt 33 afin que le fluide réfrigérant en sortie du premier échangeur de chaleur 9 ne circule pas dans le deuxième échangeur de chaleur 13 et passe dans la conduite de contournement 30.

Le clapet antiretour 23 permet d'éviter que du fluide réfrigérant en sortie de la conduite de contournement 30 ne reflue vers le deuxième échangeur de chaleur 13.

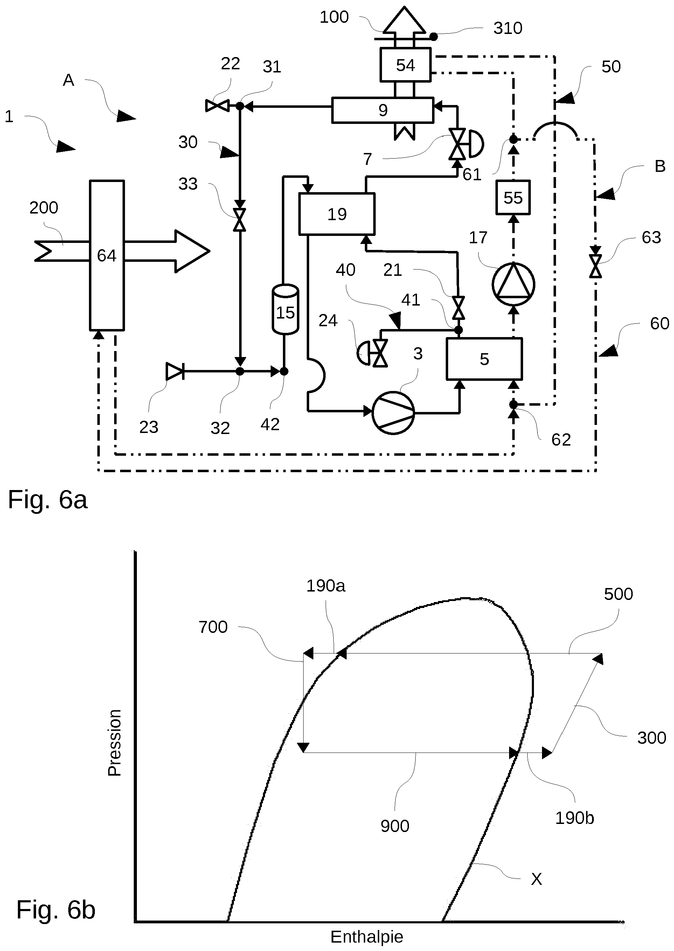

Selon une variante, le mode de refroidissement peut fonctionner lorsque le circuit de climatisation inversible indirect 1 comporte un IHX 19 comme cela est illustré à la figure 6a. Cette variante du mode de refroidissement comporte les mêmes étapes que le mode de refroidissement illustré à la figure 5a, à la différence que :
- avant d'arriver dans le premier dispositif de détente 7, le fluide réfrigérant passe par l'IHX 19, et
- avant d'arriver dans le compresseur 3, le fluide réfrigérant en provenance de la conduite de contournement 30 passe également par l'IHX 19.

L'influence de l'IHX 19 est visible sur le diagramme pression /enthalpie de la figure 6b. L'IHX 19 permet une diminution de l'enthalpie du fluide réfrigérant, illustrée par la flèche 190a, avant son entrée dans le premier échangeur de chaleur 9 en transférant une partie de son enthalpie au fluide réfrigérant en amont du compresseur 3, illustré par la flèche 190b. La variation d'enthalpie illustrée par la flèche 900 est alors plus grande que celle illustrée à la figure 5b où il n'y a pas d'IHX 19. L'IHX 19 permet une augmentation de la puissance de refroidissement et améliore le coefficient de performance (ou COP pour « coefficient of performance ») en diminuant l'enthalpie du fluide réfrigérant en sortie de l'échangeur de chaleur bifluide 5 et en la transférant au fluide réfrigérant avant son entrée dans le compresseur 3.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur les figures 5a et 6a, une portion du fluide caloporteur circule dans la première conduite de circulation 50 et traverse le troisième échangeur de chaleur 54. Le fluide caloporteur ne perd cependant pas d'enthalpie car le volet d'obstruction 310 est refermé et bloque le flux d'air intérieur 100 de sorte qu'il ne traverse pas le troisième échangeur de chaleur 54.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200. La quatrième vanne d'arrêt 63 est ouverte pour permettre le passage du fluide caloporteur.

Une solution alternative (non représentée) pour que le fluide caloporteur n'échange pas avec le flux d'air intérieur 100 au niveau du troisième échangeur de chaleur 54, est de munir comme sur la figure 4 la première conduite de circulation 50 de la cinquième vanne d'arrêt 53 et de la fermer de sorte à empêcher le fluide caloporteur de circuler dans ladite première conduite de circulation 50.

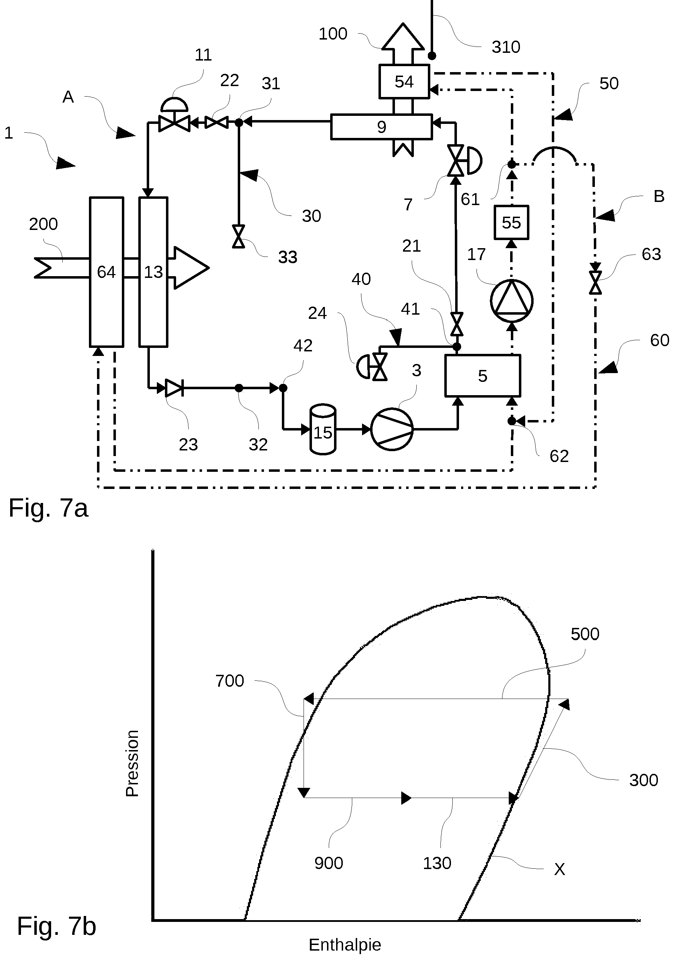

La figure 7a montre un mode de déshumidification dans lequel :
- le fluide réfrigérant passe successivement dans le compresseur 3, l'échangeur de chaleur bifluide 5, le premier dispositif de détente 7, le premier échangeur de chaleur 9, le deuxième dispositif de détente 11 et le deuxième échangeur de chaleur 13 avant de retourner au compresseur 3,
- une portion du fluide caloporteur en sortie de l'échangeur de chaleur bifluide 5 circule dans le troisième échangeur de chaleur 54 de la première conduite de circulation 50 et une autre portion du fluide caloporteur en sortie de l'échangeur de chaleur bifluide 5 circule dans le quatrième échangeur de chaleur 64 de la deuxième conduite de circulation 50,
- le volet d'obstruction 310 est ouvert de sorte à permettre au flux d'air intérieur 100 de circuler dans le troisième échangeur de chaleur 54.

Les variations de pression et d'enthalpie que subit le fluide réfrigérant lors de ce mode de déshumidification, sont illustrées sur le diagramme pression / enthalpie de la figure 7b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3.

Le fluide réfrigérant traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant perd alors de l'enthalpie tout en restant à une pression constante.

Le fluide réfrigérant passe ensuite dans le premier dispositif de détente 7. Le fluide réfrigérant subit une perte de pression isenthalpique, illustrée par la flèche 700 et croise la courbe de saturation X, ce qui le fait passer dans un état de mélange liquide plus gaz.

Le fluide réfrigérant traverse ensuite le premier échangeur de chaleur 9 où il gagne de l'enthalpie comme illustré par la flèche 900 en refroidissant le flux d'air intérieur 100.

A la sortie du premier échangeur de chaleur 9, le fluide réfrigérant est redirigé vers le deuxième échangeur de chaleur 13. Avant d'arriver au deuxième échangeur de chaleur 13, le fluide réfrigérant passe dans le premier dispositif de détente 11 sans subir de perte de pression ou le contourne.

Le fluide réfrigérant traverse ensuite le deuxième échangeur de chaleur 13 où il continue de gagner de l'enthalpie, comme illustré par la flèche 130, en absorbant de l'enthalpie du flux d'air extérieur 200. Le fluide réfrigérant rejoint ainsi la courbe de saturation X et repasse à l'état gazeux.

Le fluide réfrigérant rejoint ensuite le compresseur 3.

Dans ce mode de déshumidification, les dispositifs de redirection du fluide réfrigérant sont configurés de sorte que le fluide réfrigérant ne circule pas dans la conduite de contournement 30 ni dans la conduite de dérivation 40.

Cela est notamment possible en :
- fermant le troisième dispositif de détente 24 et en ouvrant la première vanne d'arrêt 21 afin que le fluide réfrigérant en sortie de l'échangeur de chaleur bifluide 5 ne circule pas dans la conduite de dérivation 40,
- ouvrant la deuxième vanne d'arrêt 22 et en fermant la troisième vanne d'arrêt 33 afin que le fluide réfrigérant en sortie du premier échangeur de chaleur 9 ne circule pas dans la conduite de contournement 30 et passe dans le deuxième échangeur de chaleur 13.

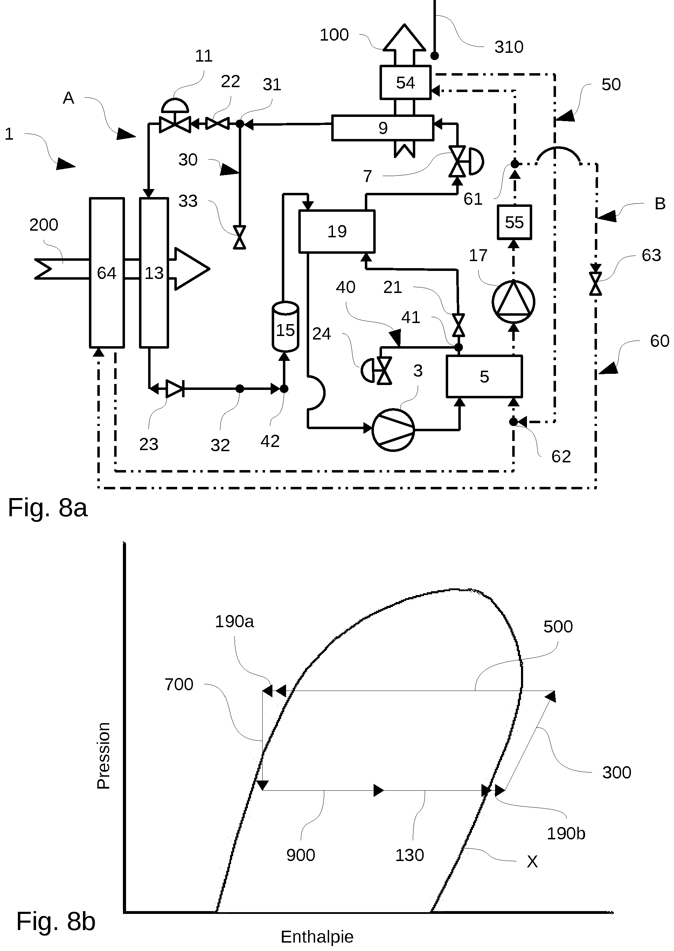

Selon une variante, le mode de déshumidification peut fonctionner lorsque le circuit de climatisation inversible indirect 1 comporte un IHX 19 comme cela est illustré à la figure 8a. Cette variante du mode de déshumidification comporte les mêmes étapes que le mode de déshumidification illustré à la figure 7a, à la différence que :
- avant d'arriver dans le premier dispositif de détente 7, le fluide réfrigérant passe par l'IHX 19, et
- avant d'arriver dans le compresseur 3, le fluide réfrigérant en provenance du deuxième échangeur de chaleur 13 passe également par l'IHX 19.

L'influence de l'IHX 19 est visible sur le diagramme pression /enthalpie de la figure 8b. L'IHX 19 permet une diminution de l'enthalpie du fluide réfrigérant, illustrée par la flèche 190a, avant son entrée dans le premier échangeur de chaleur 9 en transférant une partie de son enthalpie au fluide réfrigérant en amont du compresseur 3, illustré par la flèche 190b. La variation d'enthalpie illustrée par la flèche 900 est alors plus grande que celle illustrée à la figure 7b où il n'y a pas d'IHX 19. L'IHX 19 permet une augmentation de la puissance de refroidissement et améliore le coefficient de performance (ou COP pour « coefficient of performance ») en diminuant l'enthalpie du fluide réfrigérant en sortie de l'échangeur de chaleur bifluide 5 et en la transférant au fluide réfrigérant avant son entrée dans le compresseur 3.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur les figures 7a et 8a, une portion du fluide caloporteur circule dans la première conduite de circulation 50 et traverse le troisième échangeur de chaleur 54. Le fluide caloporteur perd de l'enthalpie en réchauffant le flux d'air intérieur 100. Pour cela, le volet d'obstruction 310 est ouvert ou la cinquième vanne d'arrêt 53 est ouverte.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200. La quatrième vanne d'arrêt 63 est ouverte pour permettre le passage du fluide caloporteur.

Ce mode de déshumidification est utile pour déshumidifier le flux d'air intérieur 100 en lui faisant subir un refroidissement au niveau du premier échangeur de chaleur 9 et en le réchauffant au niveau du troisième échangeur de chaleur 54.

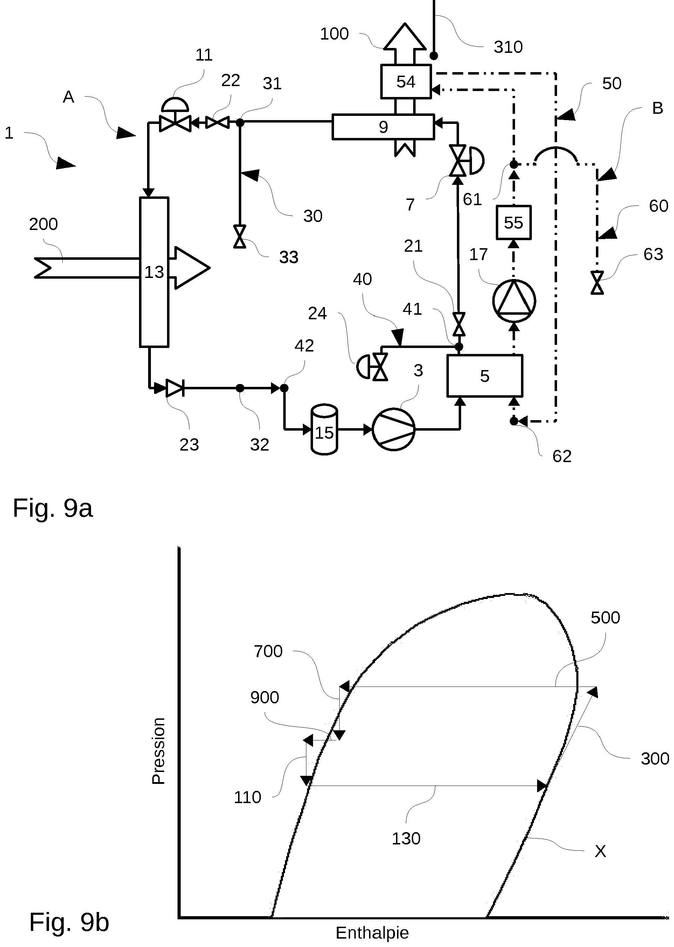

La figure 9a montre un mode pompe à chaleur dans lequel :
- le fluide réfrigérant passe successivement dans le compresseur 3, l'échangeur de chaleur bifluide 5, le premier dispositif de détente 7, le premier échangeur de chaleur 9, le deuxième dispositif de détente 11 et le deuxième échangeur de chaleur 13 avant de retourner au compresseur 3,
- le fluide caloporteur en sortie de l'échangeur de chaleur bifluide 5 circule uniquement dans le troisième échangeur de chaleur 54 de la première conduite de circulation 50,
- le volet d'obstruction 310 est ouvert de sorte à permettre au flux d'air intérieur 100 de circuler dans le troisième échangeur de chaleur 54.

Les variations de pression et d'enthalpie que subit le fluide réfrigérant lors de ce mode pompe à chaleur, sont illustrées sur le diagramme pression / enthalpie de la figure 9b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3.

Le fluide réfrigérant traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant perd alors de l'enthalpie tout en restant à une pression constante.

Le fluide réfrigérant passe ensuite dans le premier dispositif de détente 7. Le fluide réfrigérant subit une première perte de pression isenthalpique, illustrée par la flèche 700 et croise la courbe de saturation X, ce qui le fait passer dans un état de mélange liquide plus gaz.

Le fluide réfrigérant traverse ensuite le premier échangeur de chaleur 9 où il continue de perdre de l'enthalpie comme illustré par la flèche 900 en réchauffant le flux d'air intérieur 100.

A la sortie du premier échangeur de chaleur 9, le fluide réfrigérant est redirigé vers le deuxième échangeur de chaleur 13. Avant d'arriver au deuxième échangeur de chaleur 13, le fluide réfrigérant passe dans le premier dispositif de détente 11 où il subit une deuxième perte de pression isenthalpique illustrée par la flèche 110.

Le fluide réfrigérant traverse ensuite le deuxième échangeur de chaleur 13 où il gagne de l'enthalpie comme illustré par la flèche 130 en absorbant de l'enthalpie du flux d'air extérieur 200. Le fluide réfrigérant rejoint ainsi la courbe de saturation X et repasse à l'état gazeux.

Le fluide réfrigérant rejoint ensuite le compresseur 3.

Dans ce mode pompe à chaleur, les dispositifs de redirection du fluide réfrigérant sont configurés de sorte que le fluide réfrigérant ne circule pas dans la conduite de contournement 30 ni dans la conduite de dérivation 40.

Cela est notamment possible en :
- fermant le troisième dispositif de détente 24 et en ouvrant la première vanne d'arrêt 21 afin que le fluide réfrigérant en sortie de l'échangeur de chaleur bifluide 5 ne circule pas dans la conduite de dérivation 40,
- ouvrant la deuxième vanne d'arrêt 22 et en fermant la troisième vanne d'arrêt 33 afin que le fluide réfrigérant en sortie du premier échangeur de chaleur 9 ne circule pas dans la conduite de contournement 30 et passe dans le deuxième dispositif de détente 11 et le deuxième échangeur de chaleur 13.

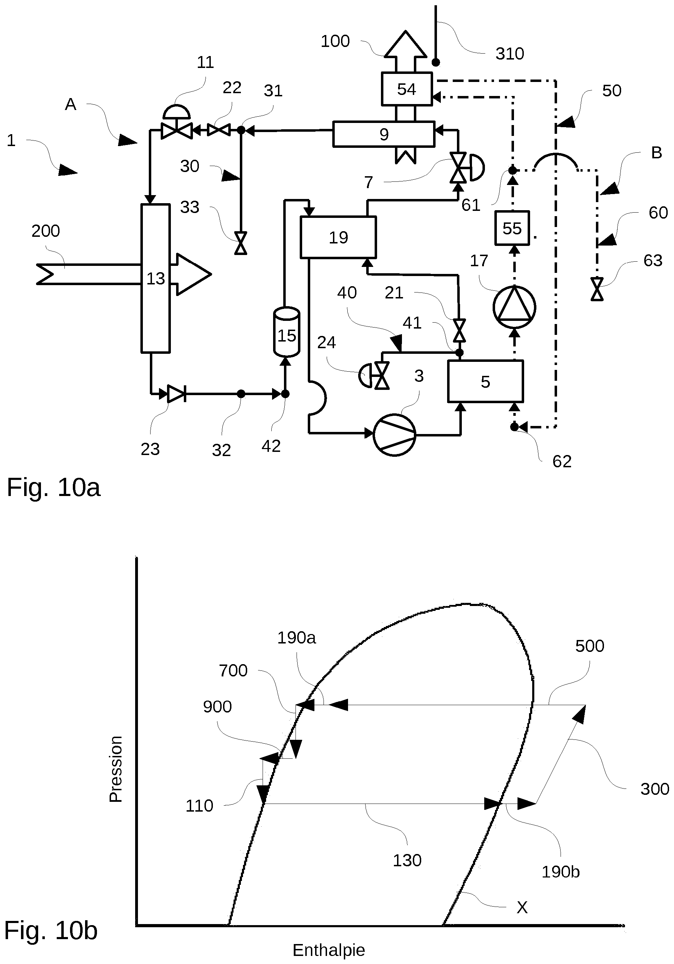

Selon une variante, le mode pompe à chaleur peut fonctionner lorsque le circuit de climatisation inversible indirect 1 comporte un IHX 19 comme cela est illustré à la figure 10. Cette variante du mode pompe à chaleur comporte les mêmes étapes que le mode de déshumidification illustré à la figure 9a, à la différence que :
- avant d'arriver dans le premier dispositif de détente 7, le fluide réfrigérant passe par l'IHX 19, et
- avant d'arriver dans le compresseur 3, le fluide réfrigérant en provenance du deuxième échangeur de chaleur 13 passe également par l'IHX 19.

L'influence de l'IHX 19 est visible sur le diagramme pression /enthalpie de la figure 10b. L'IHX 19 permet une diminution de l'enthalpie du fluide réfrigérant, illustrée par la flèche 190a, avant son entrée dans le premier échangeur de chaleur 9 en transférant une partie de son enthalpie au fluide réfrigérant en amont du compresseur 3, illustré par la flèche 190b.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur les figures 9a et 10, le fluide caloporteur circule dans la première conduite de circulation 50 et traverse le troisième échangeur de chaleur 54. Le fluide caloporteur perd de l'enthalpie en réchauffant le flux d'air intérieur 100. Pour cela, le volet d'obstruction 310 est ouvert ou la cinquième vanne d'arrêt 53 est ouverte. La quatrième vanne d'arrêt 63 est quant à elle fermée pour empêcher le passage du fluide caloporteur dans la deuxième conduite de circulation 60.

Ce mode pompe à chaleur est utile pour réchauffer le flux d'air intérieur 100 à la fois au niveau du premier échangeur de chaleur 9 et du troisième échangeur de chaleur 54 en absorbant de l'enthalpie du flux d'air extérieur 200 au niveau du deuxième échangeur de chaleur 13.

De plus, l'élément électrique chauffant 55 peut être en fonctionnement afin de fournir un apport supplémentaire d'énergie calorifique au fluide caloporteur pour réchauffer le flux d'air intérieur 100.

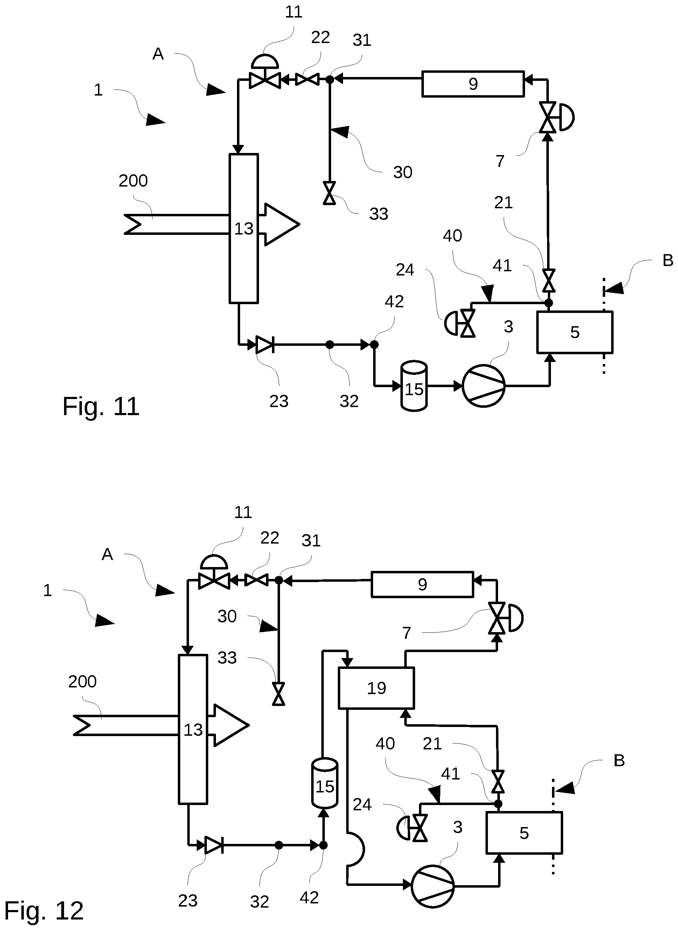

La figure 11 montre un premier mode de dégivrage dans lequel seule la première boucle de fluide réfrigérant A est en fonctionnement.

Dans ce premier mode de dégivrage, le fluide réfrigérant passe successivement dans le compresseur 3, l'échangeur de chaleur bifluide 5, le premier dispositif de détente 7, le premier échangeur de chaleur 9, le deuxième dispositif de détente 11 et le deuxième échangeur de chaleur 13 avant de retourner au compresseur 3.

Ce premier mode de dégivrage est utile pour apporter du fluide réfrigérant chaud au niveau du deuxième échangeur de chaleur 13 afin de faire fondre du givre s'étant accumulé au niveau dudit deuxième échangeur de chaleur 13 au cour du fonctionnement en mode pompe à chaleur.

Dans ce premier mode de dégivrage, le fluide réfrigérant traverse dans un premier temps l'échangeur de chaleur bifluide 5 en ne perdant pas ou peu d'enthalpie par exemple du fait que la deuxième boucle de fluide caloporteur B ne fonctionne pas. Le premier dispositif de détente 7 laisse passer ensuite le fluide réfrigérant sans qu'il subisse une perte de pression ou est contourné. Le fluide réfrigérant traverse ensuite le premier échangeur de chaleur 9 en ne perdant pas ou peu d'enthalpie, par exemple du fait d'un arrêt du flux d'air intérieur 100.

Le fluide réfrigérant traverse ensuite le deuxième dispositif de détente 11 où il ne subit pas de perte de pression ou le contourne. Le fluide réfrigérant traverse ensuite le deuxième échangeur de chaleur 13 où il libère son enthalpie afin de le réchauffer et de faire fondre le givre.

Dans ce premier mode de dégivrage, les dispositifs de redirection du fluide réfrigérant sont configurés de sorte que le fluide réfrigérant ne circule pas dans la conduite de contournement 30 ni dans la conduite de dérivation 40.

Cela est notamment possible en :
- fermant le troisième dispositif de détente 24 et en ouvrant la première vanne d'arrêt 21 afin que le fluide réfrigérant en sortie de l'échangeur de chaleur bifluide 5 ne circule pas dans la conduite de dérivation 40,
- ouvrant la deuxième vanne d'arrêt 22 et en fermant la troisième vanne d'arrêt 33 afin que le fluide réfrigérant en sortie du premier échangeur de chaleur 9 ne circule pas dans la conduite de contournement 30 et passe dans le deuxième échangeur de chaleur 13.

Selon une variante, le premier mode de dégivrage peut fonctionner lorsque le circuit de climatisation inversible indirect 1 comporte un IHX 19 comme cela est illustré à la figure 12. Cette variante du premier mode de dégivrage comporte les mêmes étapes que le premier mode de dégivrage illustré à la figure 11, à la différence que :
- avant d'arriver dans le premier dispositif de détente 7, le fluide réfrigérant passe par l'IHX 19, et
- avant d'arriver dans le compresseur 3, le fluide réfrigérant en provenance du deuxième échangeur de chaleur 13 passe également par l'IHX 19.

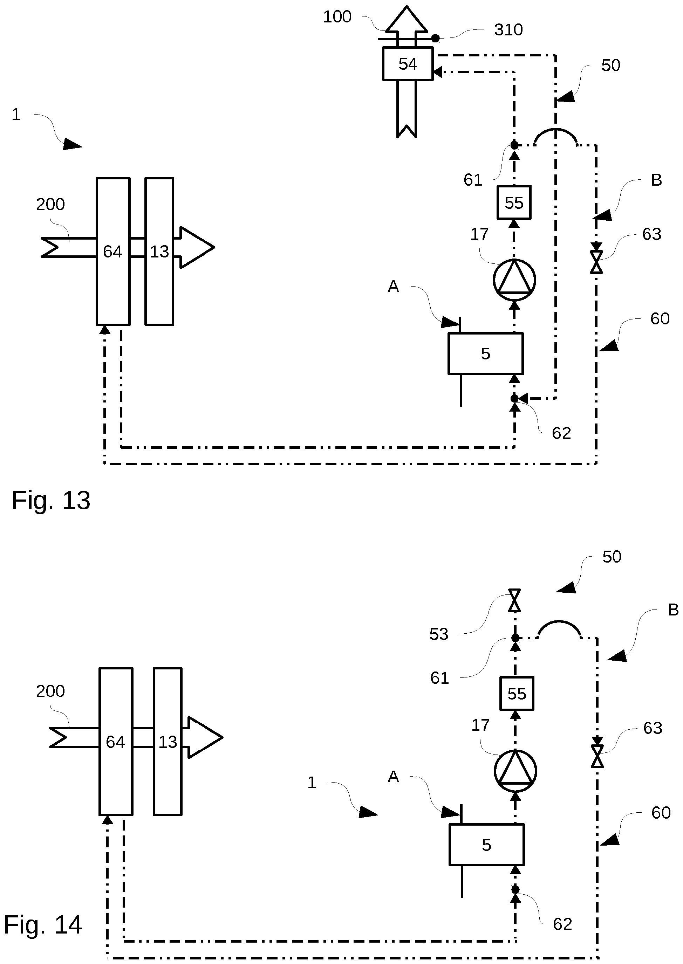

Les figures 13 et 14 montrent un deuxième mode de dégivrage où seule la deuxième boucle de fluide caloporteur B est en fonctionnement.

Dans une première variante de ce deuxième mode de dégivrage, illustrée à la figure 13, le fluide caloporteur mis en circulation par la pompe 17 passe par l'échangeur de chaleur 5 mais n'échange pas d'enthalpie avec le fluide réfrigérant de la première boucle de fluide réfrigérant A du fait que cette dernière ne fonctionne pas, par exemple par arrêt du compresseur 3.

Le fluide caloporteur traverse ensuite l'élément électrique chauffant 55 qui est en fonctionnement et réchauffe ledit fluide caloporteur.

Une portion du fluide caloporteur circule dans la première conduite de circulation 50 et traverse le troisième échangeur de chaleur 54. Le fluide caloporteur ne perd cependant pas d'enthalpie car le volet d'obstruction 310 est refermé et bloque le flux d'air intérieur 100 de sorte qu'il ne traverse pas le troisième échangeur de chaleur 54.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200 et permet de réchauffer le deuxième échangeur de chaleur 13 afin de le réchauffer et de faire fondre le givre s'étant accumulé sur ce dernier. La quatrième vanne d'arrêt 63 est ouverte pour permettre le passage du fluide caloporteur.

La deuxième variante du deuxième mode de dégivrage illustrée à la figure 14 est similaire à la premier variante de la figure 13, à la différence que le fluide caloporteur ne circule pas dans la première conduite de circulation 50 du fait de la présence et de la fermeture de la cinquième vanne d'arrêt 53.

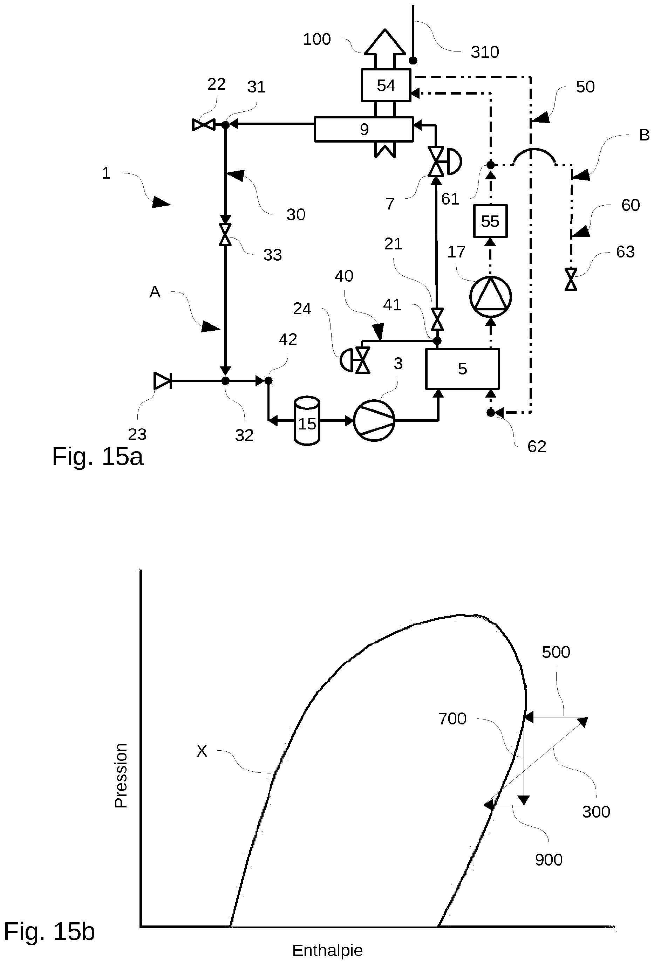

La figure 15a montre un mode gaz chaud dans lequel :
- le fluide réfrigérant passe successivement dans le compresseur 3, l'échangeur de chaleur bifluide 5, le premier dispositif de détente 7 et le premier échangeur de chaleur 9 avant de retourner au compresseur 3,
- le fluide caloporteur en sortie de l'échangeur de chaleur bifluide 5 circule dans le troisième échangeur de chaleur 54 de la première conduite de circulation 50,
- le volet d'obstruction 310 est ouvert de sorte à permettre au flux d'air intérieur 100 de circuler dans le troisième échangeur de chaleur 54.

Les variations de pression et d'enthalpie que subit le fluide réfrigérant lors de ce mode gaz chaud, sont illustrées sur le diagramme pression / enthalpie de la figure 15b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3.

Le fluide réfrigérant traverse l'échangeur de chaleur bifluide 5 et subit une perte d'enthalpie, illustrée par la flèche 500, du fait du transfert d'enthalpie vers le fluide caloporteur de la deuxième boucle de fluide caloporteur B. Le fluide réfrigérant perd alors de l'enthalpie tout en restant à une pression constante et à l'état gazeux.

Le fluide réfrigérant passe ensuite dans le premier dispositif de détente 7. Le fluide réfrigérant subit une perte de pression isenthalpique, illustrée par la flèche 700.

Le fluide réfrigérant passe ensuite dans le premier échangeur de chaleur 9 où il continue de perdre de l'enthalpie, comme illustré par la flèche 900, en réchauffant le flux d'air intérieur 100. Le fluide réfrigérant reste cependant à l'état gazeux.

A la sortie du premier échangeur de chaleur 9, le fluide réfrigérant est redirigé vers la conduite de contournement 30 avant de rentrer de nouveau dans le compresseur 3.

Ce mode gaz chaud est utile pour réchauffer le flux d'air intérieur 100.

Dans ce mode gaz chaud, les dispositifs de redirection du fluide réfrigérant sont configurés de sorte que le fluide réfrigérant ne circule pas dans le deuxième échangeur de chaleur 13 ni dans la conduite de dérivation 40.

Cela est notamment possible en :
- fermant le troisième dispositif de détente 24 et en ouvrant la première vanne d'arrêt 21 afin que le fluide réfrigérant en sortie de l'échangeur de chaleur bifluide 5 ne circule pas dans la conduite de dérivation 40,
- fermant la deuxième vanne d'arrêt 22 et en ouvrant la troisième vanne d'arrêt 33 afin que le fluide réfrigérant en sortie du premier échangeur de chaleur 9 ne circule pas dans le deuxième échangeur de chaleur 13 et passe dans la conduite de contournement 30.

Le clapet antiretour 23 permet d'éviter que du fluide réfrigérant en sortie de la conduite de contournement 30 ne reflue vers le deuxième échangeur de chaleur 13.

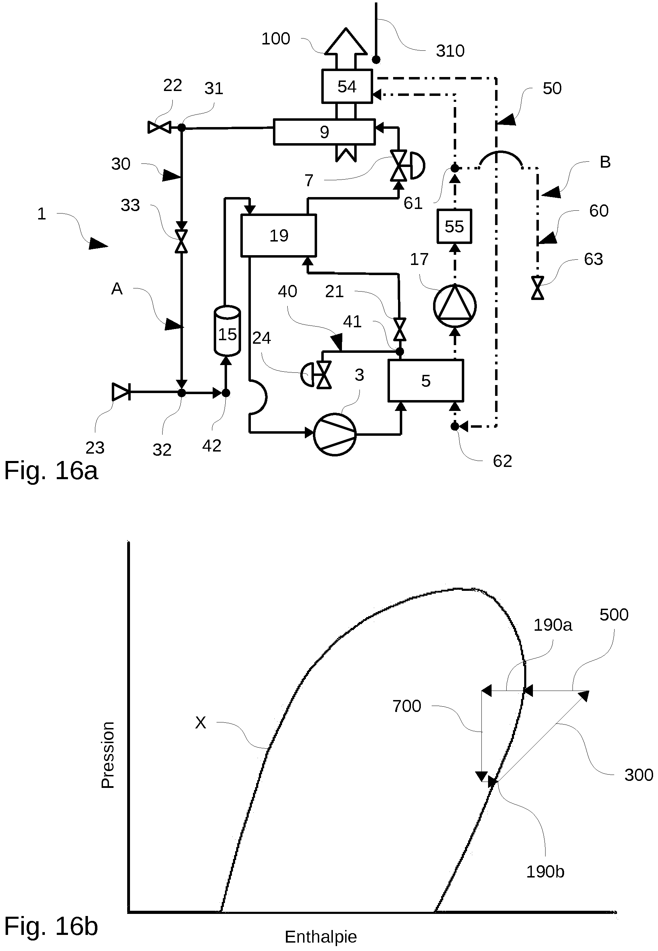

Selon une variante, le mode gaz chaud peut fonctionner lorsque le circuit de climatisation inversible indirect 1 comporte un IHX 19 comme cela est illustré à la figure 16a. Cette variante du mode gaz chaud comporte les mêmes étapes que le mode gaz chaud illustré à la figure 15a, à la différence que :
- avant d'arriver dans le premier dispositif de détente 7, le fluide réfrigérant passe par l'IHX 19, et
- avant d'arriver dans le compresseur 3, le fluide réfrigérant en provenance de la conduite de contournement 30 passe également par l'IHX 19.

L'influence de l'IHX 19 est visible sur le diagramme pression /enthalpie de la figure 16b. L'IHX 19 permet une diminution de l'enthalpie du fluide réfrigérant, illustrée par la flèche 190a, avant son entrée dans le premier échangeur de chaleur 9 en transférant une partie de son enthalpie au fluide réfrigérant en amont du compresseur 3, illustré par la flèche 190b. L'IHX 19 compense la perte d'enthalpie au niveau du premier échangeur de chaleur 9 du fluide réfrigérant et permet audit fluide réfrigérant d'entrer dans le compresseur 3 avec une enthalpie supérieure au cas de figure sans IHX 19, voir même avec un fluide réfrigérant en surchauffe, ce qui est meilleur pour le compresseur 3 et qui augmente sa longévité.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur les figures 15a et 16a, le fluide caloporteur circule dans la première conduite de circulation 50 et traverse le troisième échangeur de chaleur 54. Le fluide caloporteur perd de l'enthalpie au niveau dudit troisième échangeur de chaleur 54 en la cédant au flux d'air intérieur 100 en réchauffant ce dernier.

Le fluide caloporteur ne circule pas dans la deuxième conduite de circulation 60 de sorte à ne pas traverser le quatrième échangeur de chaleur 64. La quatrième vanne d'arrêt 63 est fermée pour empêcher le passage du fluide caloporteur.

De plus, l'élément électrique chauffant 55 peut être en fonctionnement afin de fournir un apport supplémentaire d'énergie calorifique au fluide caloporteur pour réchauffer le flux d'air intérieur 100.

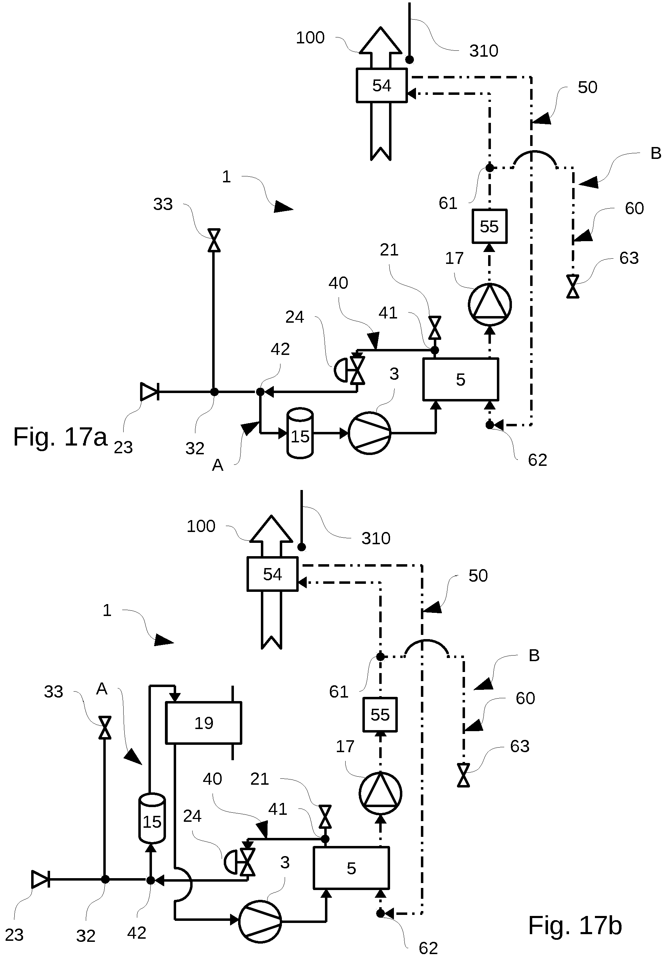

La figure 17a montre un mode pleine puissance dans lequel :
- le fluide réfrigérant passe successivement dans le compresseur 3, l'échangeur de chaleur bifluide 5 et le troisième dispositif de détente 24 avant de retourner au compresseur 3,
- le fluide caloporteur en sortie de l'échangeur de chaleur bifluide 5 circule dans le troisième échangeur de chaleur 54 de la première conduite de circulation 50,
- le volet d'obstruction 310 est ouvert de sorte à permettre au flux d'air intérieur 100 de circuler dans le troisième échangeur de chaleur 54.

Selon une variante, le mode pleine puissance peut fonctionner lorsque le circuit de climatisation inversible indirect 1 comporte un IHX 19 comme cela est illustré à la figure 17b. Cette variante du mode pleine puissance comporte les mêmes étapes que le mode pleine puissance illustré à la figure 17a, à la différence que avant d'arriver dans le compresseur 3, le fluide réfrigérant en provenance du troisième dispositif de détente passe par l'IHX 19. Cependant comme le fluide réfrigérant ne circule que d'un côté de l'IHX 19, ce dernier n'a pas d'influence sur la variation d'enthalpie du fluide réfrigérant.

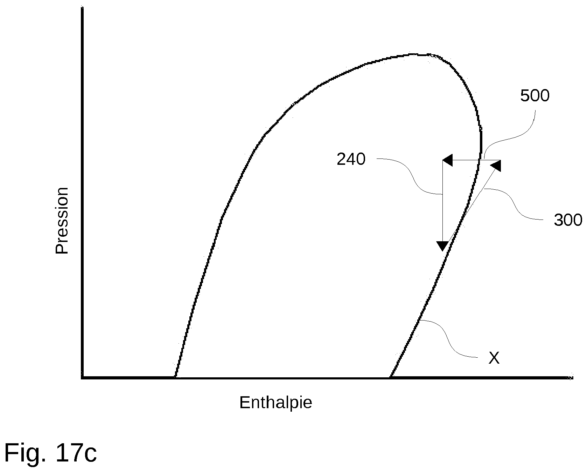

Les variations de pression et d'enthalpie que subit le fluide réfrigérant lors de ce mode pleine puissance, sont illustrées sur le diagramme pression / enthalpie de la figure 17c. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3.

Le fluide réfrigérant traverse l'échangeur de chaleur bifluide 5 et subit une perte d'enthalpie, illustrée par la flèche 500, du fait du transfert d'enthalpie vers le fluide caloporteur de la deuxième boucle de fluide caloporteur B. Le fluide réfrigérant perd alors de l'enthalpie tout en restant à une pression constante.

Le fluide réfrigérant passe ensuite dans le troisième dispositif de détente 24 de la conduite de dérivation 40. Le fluide réfrigérant subit une perte de pression isenthalpique, illustrée par la flèche 240.

Le fluide réfrigérant retourne ensuite dans compresseur 3.

Ce mode pleine puissance est utile pour réchauffer le flux d'air intérieur 100 en utilisant principalement que la puissance du compresseur 3.

Dans ce mode pleine puissance, les dispositifs de redirection du fluide réfrigérant sont configurés de sorte que le fluide réfrigérant en sortie de l'échangeur de chaleur bifluide 5 circule uniquement dans la conduite de dérivation 40.

Cela est notamment possible en :
- fermant la première vanne d'arrêt 21 afin que le fluide réfrigérant en sortie de l'échangeur de chaleur bifluide 5 ne circule pas vers le premier dispositif de détente 7,
- fermant la troisième vanne d'arrêt 33 afin que le fluide réfrigérant en sortie de la conduite de dérivation 40 ne reflue pas dans la conduite de contournement 30.

Le clapet antiretour 23 permet d'éviter que du fluide réfrigérant en sortie de la conduite de dérivation 40 ne reflue vers le deuxième échangeur de chaleur 13.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur les figures 17a et 17b, le fluide caloporteur circule dans la première conduite de circulation 50 et traverse le troisième échangeur de chaleur 54. Le fluide caloporteur perd de l'enthalpie au niveau dudit troisième échangeur de chaleur 54 en la cédant au flux d'air intérieur 100 en réchauffant ce dernier.

Le fluide caloporteur ne circule pas dans la deuxième conduite de circulation 60 de sorte à ne pas traverser le quatrième échangeur de chaleur 64. La quatrième vanne d'arrêt 63 est fermée pour empêcher le passage du fluide caloporteur.

Ainsi, on voit bien que de part son architecture, le circuit de climatisation inversible indirect 1 selon l'invention permet une utilisation selon différents modes de fonctionnement aussi bien pour refroidir, réchauffer, ou déshumidifier l'air à destination de l'habitacle ainsi que pour dégivrer le deuxième échangeur de chaleur 13.

## Revendications

1. Circuit de climatisation indirect (1) pour véhicule automobile comportant :
• une première boucle de fluide réfrigérant (A) dans laquelle circule un fluide réfrigérant, ladite première boucle de fluide réfrigérant (A) comportant dans le sens de circulation du fluide réfrigérant :
∘ un compresseur (3),
∘ un premier dispositif de détente (7),
∘ un premier échangeur de chaleur (9) étant destiné à être traversé par un flux d'air intérieur (100) au véhicule automobile,
∘ un deuxième dispositif de détente (11),
∘ un deuxième échangeur de chaleur (13) étant destiné à être traversé par un flux d'air extérieur (200) au véhicule automobile, et
∘ une conduite de contournement (30) du deuxième échangeur de chaleur (13),
• une deuxième boucle de fluide caloporteur (B) dans laquelle circule un fluide caloporteur, et
• un échangeur de chaleur bifluide (5) agencé conjointement sur la première boucle de fluide réfrigérant (A) en aval du compresseur (3), entre ledit compresseur (3) et le premier dispositif de détente (7), et sur la deuxième boucle de fluide caloporteur (B), de façon à permettre les échanges de chaleur entre la première boucle de fluide réfrigérant (A) et la deuxième boucle de fluide caloporteur (B),
**caractérisé en ce que** la première boucle de fluide réfrigérant (A) comporte une conduite de dérivation (40) du fluide réfrigérant, reliant la sortie de fluide réfrigérant de l'échangeur de chaleur bifluide (5) à un point disposé en amont du compresseur (3), entre la sortie de fluide réfrigérant de la conduite de contournement (30) et ledit compresseur (3).

2. Circuit de climatisation inversible indirect (1) selon la revendication précédente, **caractérisé en ce qu'**il comporte un dispositif de redirection du fluide réfrigérant en provenance de l'échangeur de chaleur bifluide (5) vers le premier dispositif de détente (7) ou vers la conduite de dérivation (40).

3. Circuit de climatisation inversible indirect (1) selon l'une des revendications précédentes, **caractérisé en ce qu'**il comporte un dispositif de redirection du fluide réfrigérant en provenance du premier échangeur de chaleur (9) vers le deuxième échangeur de chaleur (13) ou vers la conduite de contournement (30).

4. Circuit de climatisation inversible indirect (1) selon l'une des revendications précédentes, **caractérisé en ce que** la deuxième boucle de fluide caloporteur (B) comporte :
∘ l'échangeur de chaleur bifluide (5),
∘ une première conduite de circulation (50) de fluide caloporteur comportant un troisième échangeur de chaleur (54) destiné à être traversé par un flux d'air intérieur (100) au véhicule automobile, et reliant un premier point de jonction (61) disposé en aval de l'échangeur de chaleur bifluide (5) et un deuxième point de jonction (62) disposé en amont dudit échangeur de chaleur bifluide (5),
∘ une deuxième conduite de circulation (60) de fluide caloporteur comportant un quatrième échangeur de chaleur (64) destiné à être traversé par un flux d'air extérieur (200) au véhicule automobile, et reliant le premier point de jonction (61) disposé en aval de l'échangeur de chaleur bifluide (5) et le deuxième point de jonction (62) disposé en amont dudit échangeur de chaleur bifluide (5), et
∘ une pompe (17) disposée en aval ou en amont de l'échangeur de chaleur bifluide (5), entre le premier point de jonction (61) et le deuxième point de jonction (62).

5. Circuit de climatisation inversible indirect (1) selon la revendication précédente **caractérisé en ce que** la première boucle de fluide caloporteur (B) comporte un élément électrique chauffant (55) du fluide caloporteur disposé, dans le sens de circulation du fluide caloporteur, en aval de l'échangeur de chaleur bifluide (5), entre ledit échangeur de chaleur bifluide (5) et le premier point de jonction (61).

6. Circuit de climatisation inversible indirect (1) selon l'une des revendications 4 ou 5, **caractérisé en ce qu'**il comporte un dispositif de redirection du fluide caloporteur en provenance de l'échangeur de chaleur bifluide (5) vers la première conduite de circulation (50) et/ou vers la deuxième conduite de circulation (60).

7. Circuit de climatisation inversible indirect (1) selon l'une des revendications 4 à 6, **caractérisé en ce qu'**il comporte un volet d'obstruction (310) du flux d'air intérieur (100) traversant le troisième échangeur de chaleur (54).

8. Circuit de climatisation inversible indirect (1) selon l'une des revendications précédentes, **caractérisé en ce que** la première boucle de fluide réfrigérant (A) comporte un échangeur de chaleur interne (19) permettant un échange de chaleur entre le fluide réfrigérant en sortie de l'échangeur de chaleur bifluide (5) et le fluide réfrigérant en sortie du premier échangeur de chaleur (9) ou du deuxième échangeur de chaleur (13).

9. Procédé de fonctionnement d'un circuit de climatisation inversible indirect (1) selon l'une des revendications précédentes, selon un mode de fonctionnement pleine puissance dans lequel :
∘ le fluide réfrigérant passe successivement dans le compresseur (3), l'échangeur de chaleur bifluide (5), la conduite de dérivation (40), le troisième dispositif de détente (24) avant de retourner au compresseur (3), et
∘ le fluide caloporteur circule entre l'échangeur de chaleur bifluide (5) et le troisième échangeur de chaleur (54) de la première conduite de circulation (50).

10. Procédé de fonctionnement d'un circuit de climatisation inversible indirect (1) selon la revendication 7, selon un mode de fonctionnement de refroidissement dans lequel :
∘ le fluide réfrigérant passe successivement dans le compresseur (3), l'échangeur de chaleur bifluide (5), le premier dispositif de détente (7), le premier échangeur de chaleur (9) avant de retourner au compresseur (3),
∘ une portion du fluide caloporteur en sortie de l'échangeur de chaleur bifluide (5) circule dans le troisième échangeur de chaleur (54) de la première conduite de circulation (50) et une autre portion du fluide caloporteur en sortie de l'échangeur de chaleur bifluide (5) circule dans le quatrième échangeur de chaleur (64) de la deuxième conduite de circulation (50), et
∘ le volet d'obstruction (310) étant fermé de sorte à empêcher le flux d'air intérieur (100) de circuler dans le troisième échangeur de chaleur (54).

11. Procédé de fonctionnement selon la revendication précédente, dans lequel le circuit de climatisation inversible indirect (1) est également selon la revendication 8, dans lequel :
∘ le fluide réfrigérant en sortie du premier échangeur de chaleur (9) passe dans l'échangeur de chaleur interne (19) avant de retourner au compresseur (3), et
∘ le fluide réfrigérant en sortie de l'échangeur de chaleur bifluide (5) passe dans l'échangeur de chaleur interne (19) avant de traverser le premier dispositif de détente (7).

## Patentansprüche

1. Indirekter Klimatisierungskreislauf (1) für ein Kraftfahrzeug, umfassend:
• eine erste Kältemittelschleife (A), in der ein Kältemittel zirkuliert, wobei die erste Kältemittelschleife (A) in Zirkulationsrichtung des Kältemittels umfasst:
∘ einen Kompressor (3),
∘ eine erste Entspannungsvorrichtung (7),
∘ einen ersten Wärmetauscher (9), der dazu bestimmt ist, von einem Innenluftstrom (100) des Kraftfahrzeugs durchströmt zu werden,
∘ eine zweite Entspannungsvorrichtung (11),
∘ einen zweite Wärmetauscher (13), der dazu bestimmt ist, von einem Außenluftstrom (200) des Kraftfahrzeugs durchströmt zu werden, und
∘ eine Umgehungsleitung (30) des zweiten Wärmetauschers (13),
• eine zweite Wärmeträgerfluidschleife (B), in der ein Wärmeträgerfluid zirkuliert, und
• einen Dual-Fluid-Wärmetauscher (5), der gleichzeitig an der ersten Kältemittelschleife (A) stromab des Kompressors (3), zwischen dem Kompressor (3) und der ersten Entspannungsvorrichtung (7), und an der zweiten Wärmeträgerfluidschleife (B) gelegen ist, so dass er die Wärmeaustausche zwischen der ersten Kältemittelschleife (A) und der zweiten Wärmeträgerfluidschleife (B) ermöglicht,
**dadurch gekennzeichnet, dass** die erste Kältemittelschleife (A) eine Abzweigleitung (40) für das Kältemittel umfasst, die den Kältemittelauslass des Dual-Fluid-Wärmetauschers (5) mit einem Punkt verbindet, der stromauf des Kompressors (3), zwischen dem Kältemittelauslass der Umgehungsleitung (30) und dem Kompressor (3) angeordnet ist.

2. Indirekter reversibler Klimatisierungskreislauf (1) nach dem vorhergehenden Anspruch, **dadurch gekennzeichnet, dass** er eine Umleitungsvorrichtung zur Umleitung des vom Dual-Fluid-Wärmetauscher (5) kommenden Kältemittels zur ersten Entspannungsvorrichtung (7) oder zur Abzweigleitung (40) umfasst.

3. Indirekter reversibler Klimatisierungskreislauf (1) nach einem der vorhergehenden Ansprüche, **dadurch gekennzeichnet, dass** er eine Umleitungsvorrichtung zur Umleitung des vom ersten Wärmetauscher (9) kommenden Kältemittels zum zweiten Wärmetauscher (13) oder zur Umgehungsleitung (30) umfasst.

4. Indirekter reversibler Klimatisierungskreislauf (1) nach einem der vorhergehenden Ansprüche, **dadurch gekennzeichnet, dass** die zweite Wärmeträgerfluidschleife (B) umfasst:
∘ den Dual-Fluid-Wärmetauscher (5),
∘ eine erste Wärmeträgerfluidzirkulationsleitung (50), die einen dritten Wärmetauscher (54) umfasst, der dazu bestimmt ist, von einem Innenluftstrom (100) des Kraftfahrzeugs durchströmt zu werden, und einen ersten Anschlusspunkt (61), der stromab des Dual-Fluid-Wärmetauschers (5) angeordnet ist, und einen zweiten Anschlusspunkt (62), der stromauf des Dual-Fluid-Wärmetauschers (5) angeordnet ist, verbindet,
∘ eine zweite Wärmeträgerfluidzirkulationsleitung (60), die einen vierten Wärmetauscher (64) umfasst, der dazu bestimmt ist, von einem Außenluftstrom (200) des Kraftfahrzeugs durchströmt zu werden, und den ersten Anschlusspunkt (61), der stromab des Dual-Fluid-Wärmetauschers (5) angeordnet ist, und den zweiten Anschlusspunkt (62), der stromauf des Dual-Fluid-Wärmetauschers (5) angeordnet ist, verbindet, und
∘ eine Pumpe (17), die stromab oder stromauf des Dual-Fluid-Wärmetauschers(5), zwischen dem ersten Anschlusspunkt (61) und dem zweiten Anschlusspunkt (62), angeordnet ist.

5. Indirekter reversibler Klimatisierungskreislauf (1) nach dem vorhergehenden Anspruch, **dadurch gekennzeichnet, dass** die erste Wärmeträgerfluidschleife (B) ein elektrisches Heizelement (55) für das Wärmeträgerfluid umfasst, das in Zirkulationsrichtung des Wärmeträgerfluids stromab des Dual-Fluid-Wärmetauschers (5), zwischen dem Dual-Fluid-Wärmetauscher (5) und dem ersten Anschlusspunkt (61), angeordnet ist.

6. Indirekter reversibler Klimatisierungskreislauf (1) nach einem der Ansprüche 4 oder 5, **dadurch gekennzeichnet, dass** er eine Umleitungsvorrichtung zur Umleitung des vom Dual-Fluid-Wärmetauscher (5) kommenden Wärmeträgerfluids zur ersten Zirkulationsleitung (50) und/oder zur zweiten Zirkulationsleitung (60) umfasst.

7. Indirekter reversibler Klimatisierungskreislauf (1) nach einem der Ansprüche 4 bis 6, **dadurch gekennzeichnet, dass** er eine Absperrklappe (310) für den den dritten Wärmetauscher (54) durchströmenden Innenluftstrom (100) umfasst.

8. Indirekter reversibler Klimatisierungskreislauf (1) nach einem der vorhergehenden Ansprüche, **dadurch gekennzeichnet, dass** die erste Kältemittelschleife (A) einen inneren Wärmetauscher (19) umfasst, der einen Wärmeaustausch zwischen dem aus dem Dual-Fluid-Wärmetauscher (5) austretenden Kältemittel und dem aus dem ersten Wärmetauscher (9) oder aus dem zweiten Wärmetauscher (13) austretenden Kältemittel ermöglicht.

9. Verfahren zum Betreiben eines indirekten reversiblen Klimatisierungskreislaufs (1) nach einem der vorhergehenden Ansprüche gemäß einer Betriebsart mit voller Leistung, bei dem:
∘ das Kältemittel nacheinander in den Kompressor (3), den Dual-Fluid-Wärmetauscher (5), die Abzweigleitung (40), die dritte Entspannungsvorrichtung (24) einströmt, bevor es zum Kompressor (3) zurückströmt, und
∘ das Wärmeträgerfluid zwischen dem Dual-Fluid-Wärmetauscher (5) und dem dritten Wärmetauscher (54) der ersten Zirkulationsleitung (50) zirkuliert.

10. Betriebsverfahren für einen indirekten reversiblen Klimatisierungskreislauf (1) nach Anspruch 7 gemäß einer Kühlbetriebsart, bei dem:
∘ das Kältemittel nacheinander in den Kompressor (3), den Dual-Fluid-Wärmetauscher (5), die erste Entspannungsvorrichtung (7), den ersten Wärmetauscher (9) einströmt, bevor es zum Kompressor (3) zurückströmt,
∘ ein Anteil des aus dem Dual-Fluid-Wärmetauscher (5) austretenden Wärmeträgerfluids im dritten Wärmetauscher (54) der ersten Zirkulationsleitung (50) zirkuliert und ein anderer Anteil des aus dem Dual-Fluid-Wärmetauscher (5) austretenden Wärmeträgerfluid im vierten Wärmetauscher (64) der zweiten Zirkulationsleitung (50) zirkuliert und
∘ die Absperrklappe (310) geschlossen ist, so dass sie den Innenluftstrom (100) daran hindert, im dritten Wärmetauscher (54) zu zirkulieren.

11. Betriebsverfahren nach dem vorhergehenden Anspruch, bei dem der indirekte reversible Klimatisierungskreis (1) auch die Merkmale des Anspruchs 8 aufweist, bei dem:
∘ das aus dem ersten Wärmetauscher (9) austretende Kältemittel in den inneren Wärmetauscher (19) einströmt, bevor es zum Kompressor (3) zurückströmt, und
∘ das aus dem Dual-Fluid-Wärmetauscher (5) austretende Kältemittel den inneren Wärmetauscher (19) einströmt, bevor es die erste Entspannungsvorrichtung (7) durchströmt.

## Claims

1. Indirect air conditioning circuit (1) for a motor vehicle, comprising:
• a first refrigerant-fluid loop (A) in which a refrigerant fluid circulates, the said first refrigerant-fluid loop (A) comprising, in the direction in which the refrigerant fluid circulates:
∘ a compressor (3),
∘ a first expansion device (7),
∘ a first heat exchanger (9) intended to have passing through it a flow (100) of air internal to the motor vehicle,
∘ a second expansion device (11),
∘ a second heat exchanger (13) intended to have passing through it a flow (200) of air external to the motor vehicle, and
∘ a bypass pipe (30) bypassing the second heat exchanger (13),
• a second heat-transfer-fluid loop (B) in which a heat-transfer fluid circulates, and
• a two-fluid heat exchanger (5) arranged jointly on the first refrigerant-fluid loop (A) downstream of the compressor (3), between the said compressor (3) and the first expansion device (7), and on the second heat-transfer-fluid loop (B), so as to allow exchanges of heat between the first refrigerant-fluid loop (A) and the second heat-transfer-fluid loop (B),
**characterized in that** the first refrigerant-fluid loop (A) comprises a bypass pipe (40) for the refrigerant fluid, connecting the refrigerant-fluid outlet of the two-fluid heat exchanger (5) to a point positioned upstream of the compressor (3), between the refrigerant-fluid outlet of the bypass pipe (30) and the said compressor (3).

2. Indirect reversible air conditioning circuit (1) according to the preceding claim, **characterized in that** it comprises a device for redirecting the refrigerant fluid coming from the two-fluid heat exchanger (5) towards the first expansion device (7) or towards the bypass pipe (40).

3. Indirect reversible air conditioning circuit (1) according to one of the preceding claims, **characterized in that** it comprises a device for redirecting the refrigerant fluid coming from the first heat exchanger (9) towards the second heat exchanger (13) or towards the bypass pipe (30).

4. Indirect reversible air conditioning circuit (1) according to one of the preceding claims, **characterized in that** the second heat-transfer-fluid loop (B) comprises:
∘ the two-fluid heat exchanger (5),
∘ a first circulation pipe (50) for heat-transfer fluid, comprising a third heat exchanger (54) intended to have passing through it a flow (100) of air internal to the motor vehicle, and connecting a first junction (61) positioned downstream of the two-fluid heat exchanger (5) and a second junction (62) positioned upstream of the said two-fluid heat exchanger (5),
∘ a second circulation pipe (60) for heat-transfer fluid, comprising a fourth heat exchanger (64) intended to have passing through it a flow (200) of air external to the motor vehicle, and connecting the first junction (61) positioned downstream of the two-fluid heat exchanger (5) and the second junction (62) positioned upstream of the said two-fluid heat exchanger (5), and
∘ a pump (17) positioned downstream or upstream of the two-fluid heat exchanger (5), between the first junction (61) and the second junction (62) .

5. Indirect reversible air conditioning circuit (1) according to the preceding claim, **characterized in that** the first heat-transfer-fluid loop (B) comprises an electric heating element (55) for heating the heat-transfer fluid, positioned, in the direction in which the heat-transfer fluid circulates, downstream of the two-fluid heat exchanger (5), between the said two-fluid heat exchanger (5) and the first junction (61).

6. Indirect reversible air conditioning circuit (1) according to one of Claims 4 and 5, **characterized in that** it comprises a device for redirecting the heat-transfer fluid coming from the two-fluid heat exchanger (5) towards the first circulation pipe (50) and/or towards the second circulation pipe (60).

7. Indirect reversible air conditioning circuit (1) according to one of Claims 4 to 6, **characterized in that** it comprises a shut-off flap (310) obstructing the flow (100) of internal air passing through the third heat exchanger (54).

8. Indirect reversible air conditioning circuit (1) according to one of the preceding claims, **characterized in that** the first refrigerant-fluid loop (A) comprises an internal heat exchanger (19), allowing an exchange of heat between the refrigerant fluid leaving the two-fluid heat exchanger (5) and the refrigerant fluid leaving the first heat exchanger (9) or the second heat exchanger (13).

9. Method for operating an indirect reversible air conditioning circuit (1) according to one of the preceding claims, in a full-power mode in which:
∘ the refrigerant fluid passes in succession through the compressor (3), the two-fluid heat exchanger (5), the bypass pipe (40), the third expansion device (24), before returning to the compressor (3), and
∘ the heat-transfer fluid circulates between the two-fluid heat exchanger (5) and the third heat exchanger (54) of the first circulation pipe (50) .

10. Method for operating an indirect reversible air conditioning circuit (1) according to Claim 7, in a cooling mode in which:
∘ the refrigerant fluid passes in succession through the compressor (3), the two-fluid heat exchanger (5), the first expansion device (7), the first heat exchanger (9), before returning to the compressor (3),
∘ a portion of the heat-transfer fluid leaving the two-fluid heat exchanger (5) circulates through the third heat exchanger (54) of the first circulation pipe (50), and another portion of the heat-transfer fluid leaving the two-fluid heat exchanger (5) circulates through the fourth heat exchanger (64) of the second circulation pipe (50), and
∘ the shut-off flap (310) is closed so as to prevent the flow (100) of internal air from circulating through the third heat exchanger (54) .

11. Method of operation according to the preceding claim, in which the indirect reversible air conditioning circuit (1) is also according to Claim 8, in which:
∘ the refrigerant fluid leaving the first heat exchanger (9) enters the internal heat exchanger (19) before returning to the compressor (3), and
∘ the refrigerant fluid leaving the two-fluid heat exchanger (5) enters the internal heat exchanger (19) before passing through the first expansion device (7).
